## Europäisches Patentamt
## European Patent Office
## Office européen des brevets

(11) Numéro de publication : **0 091 878**
**B1**

(12) **FASCICULE DE BREVET EUROPÉEN**

(45) Date de publication du fascicule du brevet :
30.07.86

(51) Int. Cl.⁴ : **A 01 B 29/06**

(21) Numéro de dépôt : **83440024.4**

(22) Date de dépôt : **13.04.83**

(54) Rouleau de travail du sol et machine agricole équipée d'un tel rouleau.

(30) Priorité : **14.04.82 FR 8206546**

(43) Date de publication de la demande :
**19.10.83 Bulletin 83/42**

(45) Mention de la délivrance du brevet :
**30.07.86 Bulletin 86/31**

(84) Etats contractants désignés :
**BE DE GB IT NL**

(56) Documents cités :
**FR-A- 2 007 660**
**FR-A- 2 009 560**
**FR-A- 2 179 843**
**US-A- 2 952 468**

(73) Titulaire : **KUHN S.A.**
**4, Impasse des Fabriques**
**F-67700 Saverne (FR)**

(72) Inventeur : **Haberkorn, Jean-Paul**
**11, Rue Sainte-Barbe Monswiller**
**F-67700 Saverne (FR)**

Jouve, 18, rue St-Denis, 75001 Paris, France

## Description

La présente invention concerne les rouleaux de compactage du sol dont l'enveloppe extérieure est rigide et ajourée.

On connaît un tel rouleau par la demande de brevet FR-A-2 009 560.

En terres sèches ou peu humides, ces rouleaux remplissent correctement leur fonction de création d'une sous-couche tassée et d'une couche supérieure aérée.

Ces rouleaux ne sont cependant pas adaptés pour travailler en terres humides ou collantes telles que ces dernières se présentent souvent en automne.

En effet, la terre travaillée par les outils de la machine agricole avec laquelle le rouleau est généralement combiné, reste collée à ce rouleau et réussit au bout d'un temps qui peut être relativement court, à bloquer la rotation dudit rouleau.

Ainsi, l'utilisateur de la machine est obligé d'interrompre fréquemment le travail pour ôter la terre qui s'est accumulée à l'intérieur du rouleau et à sa surface. De tels arrêts représentent une perte de temps considérable.

Par ailleurs, de tels rouleaux ne permettent pas d'obtenir un bon lit de semence pour les semis d'automne.

En effet, le fait que la terre est arrachée du sol et reste collée au rouleau, a pour conséquence de former des trous à la surface de ce sol. Cette non-uniformité de la surface du sol travaillé est encore accentuée par le fait que la terre collée forme des mottes qui, lorsqu'elles sont assez lourdes, se décollent du rouleau et retombent sur ledit sol.

Or, on sait que les graines ou les semences doivent en général être déposées dans le sol à une certaine hauteur en dessous de la surface de ce sol pour qu'elles aient toutes les chances de lever, cette hauteur devant être la plus constante possible.

Dans la demande de brevet FR-A-2 179 843 qui décrit un rouleau de compactage du sol comportant plusieurs éléments indépendants les uns des autres dont l'enveloppe extérieure est rigide et ajourée, on a proposé de rendre cette enveloppe extérieure mobile de manière à pouvoir se déplacer par rapport à un organe porteur du rouleau constitué par un support cylindrique. Cette mobilité de l'enveloppe extérieure devrait permettre d'éviter l'adhérence de terre au rouleau.

Le but de la présente invention est de remédier aux inconvénients des rouleaux de l'art antérieur en fournissant un rouleau capable de générer un bon lit de semence, et lequel reste pratiquement invulnérable aux bourrages.

Dans ce but, le rouleau selon l'invention comporte un organe de repoussement de la terre souple et élastique disposé au moins en partie à l'intérieur du volume délimité par l'enveloppe extérieure et ledit organe ferme sensiblement les parties ajourées de ladite enveloppe extérieure de manière à venir en contact avec le sol et y être déformé au moins en partie, la partie déformée dudit organe de repoussement de la terre souple et élastique reprenant sa forme après avoir quitté le contact du sol au cours du déplacement du rouleau.

Ainsi, il est possible avec un rouleau conforme à l'invention de travailler dans la plupart des conditions que l'on rencontre.

En effet, la surface extérieure du rouleau peut s'enfoncer dans le sol pour remplir sa fonction de tassement du sous-sol, sans que l'organe de repoussement de la terre souple et élastique ne gêne cette opération, car la partie de cet organe qui s'appuie sur le sol est comprimée.

Ensuite, lorsque la partie de la surface extérieure du rouleau qui vient de tasser le sous-sol s'extrait du sol, elle pourra remplir la fonction de création d'une couche superficielle aérée tandis que la partie de l'organe de repoussement de la terre souple et élastique qui a été comprimée, se détend et pousse sur la terre qui adhère à ladite surface extérieure du rouleau pour la décoller, supprimant ainsi les risques de création d'un lit de semence non uniforme et les risques de blocage du rouleau évoqués plus haut.

Selon une intéressante caractéristique supplémentaire de l'invention, l'organe de repoussement de la terre souple et élastique est constitué par une chambre à air.

En effet, dans ce cas, la souplesse et l'élasticité de cet organe peuvent être choisies de manière optimale pour les différentes conditions, en gonflant plus ou moins fortement ladite chambre à air.

D'autres caractéristiques et avantages de l'invention figurent dans les sous-revendications et ressortiront de la description ci-après, avec référence au dessin annexé qui représente, à titre d'exemples non limitatifs, quelques formes de réalisation de l'invention.

Dans ces figures :

La figure 1 représente une vue latérale d'une machine agricole munie d'un rouleau selon l'invention,

La figure 2 représente une vue longitudinale d'un rouleau selon l'invention coupé suivant l'axe XX défini sur la figure 1,

La figure 3 représente une première variante d'un rouleau selon l'invention,

La figure 4 représente une deuxième variante d'un rouleau selon l'invention.

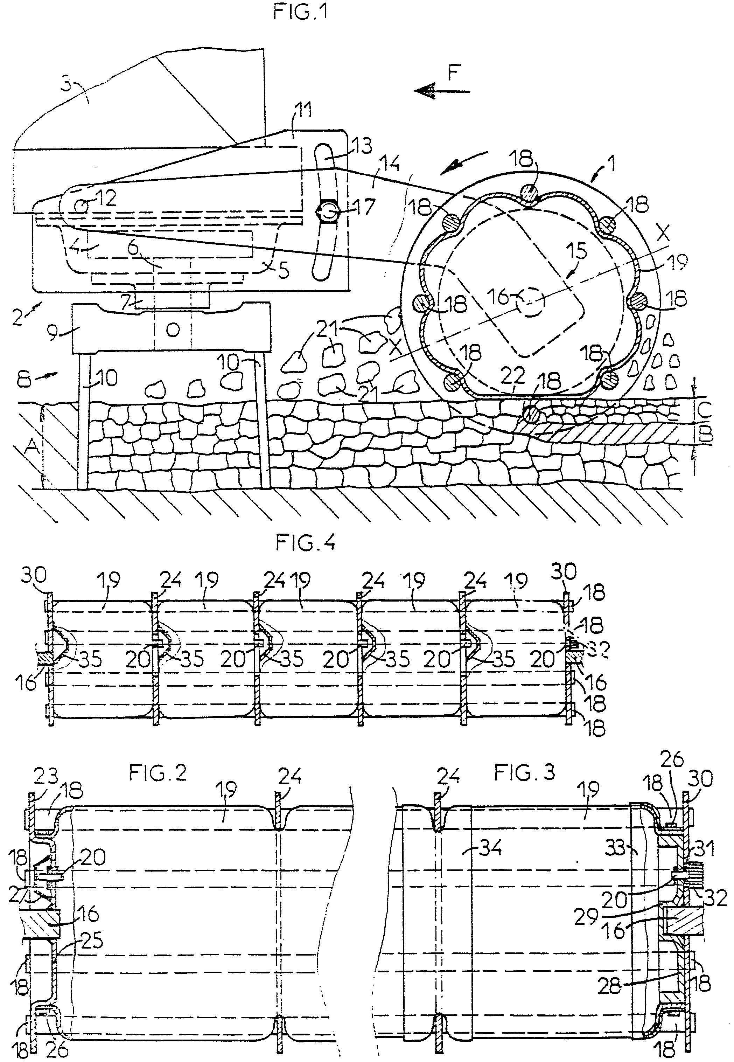

Sur la figure 1, on voit que le rouleau (1) est combiné avec une machine agricole de travail du sol telle que la herse rotative (2). Pendant le travail, cette dernière est attelée à un tracteur non représenté par l'intermédiaire d'un cadre à trois points d'accrochage (3) partiellement représenté. L'entraînement de la herse rotative (2) se fait à partir de la prise de force dudit tracteur par l'intermédiaire d'un arbre de transmission à joints de cardan non représenté qui transmet le mouvement à un carter de renvoi non représenté qui peut avoir une ou plusieurs vitesses de sortie. Ce carter de renvoi transmet le mouvement à une cascade de roues dentées (4) logées dans la poutre-caisson (5). Chaque roue dentée (4) est solidaire d'un arbre (6) guidé en rotation dans un palier (7) fixé sur le fond de la poutre-caisson (5). L'extrémité inférieure de l'arbre (6) qui s'étend au-dehors du palier (7), est solidaire d'un rotor (8) comportant un support (9) muni d'outils (10). Les roues dentées (4) de deux rotors (8) voisins sont en prise directe de telle sorte que ces deux rotors (8) soient contrarotatifs.

A chaque extrémité de la poutre-caisson (5) est soudée une plaque (11) qui supporte un axe d'articulation (12) et comporte un trou oblong (13) en arc de cercle dont le centre est confondu avec celui de l'axe d'articulation (12). A chaque axe d'articulation (12) est relié un bras (14) s'étendant vers l'arrière, compte tenu du sens d'avancement (F) de la herse rotative (2), de telle sorte que le rouleau (1) puisse être monté rotatif entre les deux extrémités (15) desdits bras (14). A cet effet, chaque extrémité (15) comporte un palier non représenté dans lequel tourne un axe (16) solidaire du rouleau (1). A peu près à égale distance de l'axe d'articulation (12) et de l'axe (16), chaque bras (14) comporte un boulon (17) qui traverse également le trou oblong (13) de telle manière que la position relative du rouleau (1) par rapport aux outils (10) puisse être modifiée. Pour ce faire, il suffira de débloquer chaque boulon (17), puis de faire pivoter le bras (14) correspondant autour de son axe d'articulation (12) de l'angle désiré et enfin de rebloquer chaque boulon (17).

Ainsi, la profondeur de travail des outils (10) (distance A) est adaptable à la nature des terrains et des travaux à réaliser puisque c'est principalement par l'intermédiaire du rouleau (1) que l'ensemble herse rotative (2)-rouleau (1) s'appuie sur le sol. A l'intérieur du rouleau (1), c'est-à-dire à l'intérieur de l'enveloppe définie par les tiges (18) s'étend une chambre à air (19) qui est gonflée après sa mise en place, grâce à une valve (20) visible sur les figures 2, 3 et 4.

Lors du gonflage de la chambre à air (19), celle-ci s'appuie contre les tiges (18) du rouleau (1) et remplit ainsi l'espace ajouré existant entre ces tiges (18).

Pendant le travail, la herse rotative munie du rouleau (1) fonctionne de la manière suivante :

Lors de la rotation des rotors (8) tournant en sens contraire l'un par rapport à l'autre, les outils (10) qui y sont montés, réalisent un important brassage, malaxage et ameublissement de la couche de terre d'épaisseur (A). Les mottes grossières (21) ainsi générées, sont projetées sur le rouleau (1) contre les tiges (18) duquel elles viennent s'écraser, ce qui provoque leur éclatement en mottes plus fines. Du fait de la présence de la chambre à air (19) lesdites mottes ne peuvent plus pénétrer à l'intérieur de l'enveloppe définie par les tiges (18) de telle sorte que le rouleau (1) ne puisse plus se remplir de terre.

Cette chambre à air (19) ne gêne cependant pas la bonne pénétration des tiges (18) dans le sol. En effet, on voit sur la figure 1 que la partie (22) de cette chambre à air s'aplatit au contact de la surface du sol, libérant ainsi une tige (18) qui peut s'enfoncer dans le sol pour y créer la sous-couche tassée d'épaisseur (B) sans que ladite partie aplatie (22) ne crée de grand tassement de la surface du sol. Lorsque cette tige (18) s'extrait du sol, elle crée une couche d'épaisseur (C) aérée composée de mottes fines.

Pour cela, elle doit soulever la terre de la couche supérieure d'épaisseur (C) qui doit pouvoir retomber intégralement sur le sol sans adhérer à ladite tige. Cette retombée de la totalité de la terre est réalisée par la partie (22) de la chambre à air (19) qui se détend et pousse sur les mottes de terre qui adhèrent à ladite tige (18) pour les décoller de telle sorte que tout risque de bourrage du rouleau soit éliminé. Le gonflage de la chambre à air (19) pourra être effectué de manière optimale pour que le décollage de la terre soit correctement réalisé sans que la surface du sol ne soit excessivement tassée.

Sur la figure 2, on voit que les tiges (18) du rouleau (1) sont maintenues ensemble par des flasques (23, 24) espacés les uns par rapport aux autres d'une certaine distance.

Les flasques d'extrémité (23) comportent un décrochement (25) réalisé par emboutissage par exemple, tandis que dans chaque flasque intermédiaire (24) est réalisé un alésage dont le diamètre est relativement important.

Au centre de chaque flasque (23) est soudé l'axe (16) par l'intermédiaire duquel le rouleau (1) est relié au bras (14) correspondant.

La chambre à air (19) est constituée par un simple tuyau dont les extrémités ouvertes sont montées sur les décrochements (25) des flasques d'extrémité (23). Ce mode de réalisation de la chambre à air est très avantageux car il ne nécessite pas d'outillages différents lorsque les rouleaux à réaliser ont des longueurs différentes. Il suffira en effet de couper dans un grand tuyau les différentes longueurs nécessaires.

Après montage des deux extrémités ouvertes du tuyau sur les décrochements (25) des deux flasques d'extrémité (23), il est avantageux, afin de garantir la liaison et l'étanchéité de cette liaison, d'agencer un collier (26). Du fait que l'alésage réalisé dans les flasques (24) a un diamètre relativement grand, la chambre à air (19) n'est pas trop comprimée à l'endroit où s'étendent lesdits flasques (24).

Le gonflage de la chambre à air (19) se réalise au moyen d'une valve (20) montée sur un flasque d'extrémité (23). Afin d'éviter les fuites d'air, le montage de la valve (20) sur le flasque (23) est étanche. Dans le but d'éviter la détérioration de ladite valve (20) par la terre qui se colle dans le décrochement (25), celle-ci est protégée par le couvercle (27).

Dans l'exemple de la figure 3, les extrémités ouvertes de la chambre à air (19) sont bouchées par un disque d'obturation (28). Dans ce cas, chaque extrémité ouverte pourra être bouchée avant que la chambre à air (19) ne soit introduite à l'intérieur de l'enveloppe définie par les tiges (18). Tout comme dans le cas de la figure 2, la liaison entre la chambre à air (19) et le disque d'obturation (28) est avantageusement assurée par un collier de serrage (26). Dans son centre, le disque d'obturation (28) comporte un décrochement (29) dont le diamètre intérieur correspond sensiblement au diamètre extérieur de l'axe (16). Ainsi, lors du gonflage de la chambre à air (19), les disques d'obturation (28) sont plaqués contre les flasques d'extrémité (30) et le bout des axes (16) qui dépasse à l'intérieur du rouleau (1), pénètre dans le décrochement (29) de telle sorte qu'après gonflage lesdits disques d'obturation (28) ne peuvent plus bouger radialement. Le gonflage est réalisé grâce à une valve (20) montée de manière étanche sur au moins un disque d'obturation (28). Afin d'accéder aisément à la valve (20), un trou (31) est réalisé dans le flasque (30). Après gonflage, la valve (20) est protégée par un bouchon (32) qui est vissé sur ladite valve (20) et qui possède avantageusement un diamètre suffisant pour pouvoir également boucher le trou (31).

Afin d'augmenter la résistance de la chambre à air (19) aux extrémités et aux endroits où s'étendent les flasques intermédiaires (24), ladite chambre à air (19) comporte des renforts (33, 34). Ces renforts (33, 34) pourront être liés à la chambre à air (19) par vulcanisation par exemple.

Le rouleau de la figure 4 diffère des rouleaux des figures 2 et 3 par le fait qu'il comporte une pluralité de chambres à air (19) qui s'étendent entre les flasques (24, 30). Ces chambres à air (19) sont chacune réalisées en une seule pièce étanche, possédant sa propre valve (20). Chaque chambre à air (19) comporte une cavité (35) qui est située à un endroit tel que la valve (20) de l'une des chambres à air (19) adjacentes, puisse s'y loger.

Ainsi, après gonflage des différentes chambres à air (19), les valves (20) seront protégées contre l'encrassement. Seule la valve (20) d'une des chambres à air (19) située à une extrémité du rouleau n'est pas protégée par la cavité (35) d'une chambre à air adjacente. Mais la protection de cette valve peut être réalisée de manière similaire à celle de la figure 3.

Dans l'exemple de la figure 4, les chambres à air (19) ont sensiblement toutes la même longueur. Il est cependant possible d'avoir des chambres à air de longueur différente. Dans ce cas, il est en effet possible de réaliser un grand nombre de rouleaux de longueur différente, en combinant entre elles les différentes longueurs de chambre à air.

Il est bien évident que les chambres à air (19) des rouleaux des figures 2 et 4, pourront également posséder des renforts aux endroits qui sont en contact avec les flasques (23, 24, 30) tels que la chambre à air de la figure 3.

D'autre part, les chambres à air de la figure 4, pourront évidemment être réalisées d'une manière semblable à celles des figures 2 ou 3. De même, les chambres à air des figures 2 ou 3 pourront être réalisées en une seule pièce étanche comme les chambres à air de la figure 4.

Par ailleurs, il est également évident que l'enveloppe extérieure du rouleau, qui dans les figures 1, 2, 3, 4 est formée par les tiges (18), peut avoir une structure différente.

Il est bien évident qu'en terres sèches ou peu humides, l'organe de repoussement de la terre souple et élastique pourra être enlevé.

## Revendications

1. Rouleau de compactage du sol (1) comportant une enveloppe extérieure (18) rigide et ajourée, caractérisé par le fait qu'un organe de repoussement de la terre souple et élastique (19) est disposé au moins en partie à l'intérieur du volume délimité par ladite enveloppe extérieure (18) et ferme sensiblement les parties ajourées de cette enveloppe extérieure (18) de manière à venir en contact avec le sol et y être déformé au moins en partie, la partie déformée (22) dudit organe de repoussement de la terre souple et élastique (19) reprenant sa forme après avoir quitté le contact du sol au cours du déplacement du rouleau (1).

2. Rouleau selon la revendication 1, caractérisé par le fait que ledit organe de repoussement de la terre souple et élastique (19) est formé par une chambre à air (19).

3. Rouleau selon la revendication 1, caractérisé par le fait que ledit organe de repoussement de la terre souple et élastique (19) est formé par une pluralité de chambres à air (19).

4. Rouleau selon l'une des revendications 2 ou 3, caractérisé par le fait que la chambre à air (19) est constituée par un tuyau ouvert à ses deux extrémités.

5. Rouleau selon la revendication 4, caractérisé par le fait que chaque extrémité du tuyau est bouchée par un moyen d'obturation (23, 25 ; 28).

6. Rouleau selon la revendication 5, caractérisé par le fait que le moyen d'obturation est constitué par un décrochement (25) réalisé sur le flasque d'extrémité (23), sur lequel est montée l'extrémité correspondante du tuyau.

7. Rouleau selon la revendication 5, caractérisé par le fait que le moyen d'obturation est constitué par un disque (28) inséré dans l'extrémité correspondante du tuyau.

8. Rouleau selon la revendication 7, caractérisé par le fait que le disque d'obturation (28) comporte des moyens (29) empêchant son déplacement radial par rapport à l'axe du rouleau (1).

9. Rouleau selon la revendication 8, caractérisé par le fait que les moyens (29) empêchant le déplacement radial du disque d'obturation (28) par rapport à l'axe du rouleau (1), sont opérationnels après gonflage de la chambre à air (19).

10. Rouleau selon l'une des revendications 5 à 9, caractérisé par le fait que la liaison entre une extrémité du tuyau et son moyen d'obturation (23, 25 ; 28) correspondant est réalisée par un moyen de serrage (26).

11. Rouleau selon l'une des revendications 5 à 10, caractérisé par le fait qu'une valve (20) est montée de manière étanche sur l'un au moins des moyens d'obturation (23, 25 ; 28).

12. Rouleau selon l'une des revendications 3 à 11, caractérisé par le fait qu'il comporte au moins deux chambres à air (19) de longueur différente.

13. Rouleau selon l'une des revendications 3 à 12, caractérisé par le fait que chaque chambre à air (19) comporte une cavité (35) dans laquelle peut se loger la valve (20) d'une des chambres à air (19) adjacentes.

14. Rouleau selon l'une des revendications précédentes, caractérisé par le fait qu'aux endroits où s'étendent les flasques d'extrémité (23, 30) et/ou intermédiaire (24), l'organe de repoussement de la terre souple et élastique (19) comporte des renforts (33, 34).

15. Machine agricole, caractérisée par le fait qu'elle comporte un rouleau de compactage du sol (1) selon l'une des revendications précédentes.

## Claims

1. Roller for compacting the soil (1) including a rigid and perforated exterior casing (18), characterised by the fact that a flexible and elastic soil repulsion element (19) is placed, at least in part, in the interior of the volume defined by the said exterior casing (18) and substantially closes the perforated portions of this exterior casing (18) in such a way to come in contact with the soil and to be deformed, at least in part, the deformed part (22) of said flexible and elastic soil repulsion element (19) reverts to its original form after having lost contact with the soil during the displacement of the roller (1).

2. Roller according to claim 1, characterised by the fact that the said flexible and elastic soil repulsion element (19) is formed by a chamber of air (19).

3. Roller according to claim 1, characterised by the fact that the said flexible and elastic soil repulsion element is formed by a plurality of chambers of air (19).

4. Roller according to claim 2 or 3, characterised by the fact that the chamber of air (19) is made up of a tube open at both ends.

5. Roller according to claim 4, characterised by the fact that each end of the tube is closed by the means of a closing device (23, 25 ; 28).

6. Roller according to claim 5, characterised by the fact that the closing device is made up of a boss realised on the end flange (23) on which is mounted the corresponding end of the tube.

7. Roller according to claim 5, characterised by the fact that the closing device is made up of a disc (28) inserted into the corresponding end of the tube.

8. Roller according to claim 7, characterised by the fact that the closing disc (28) has means (29) to prevent its radial displacement in relation to the axis of the roller (1).

9. Roller according to claim 8, characterised by the fact that the means (29) preventing the radial displacement of the closing disc (28) in relation to the axis of the roller (1), are operational after the chamber of air (19) has been inflated.

10. Roller according to any one of claims 5 to 9, characterised by the fact that the connection between an end of the tube and its corresponding closing device (23, 25 ; 28) is realised by a tightening means (26).

11. Roller according to any one of claims 5 to 10, characterised by the fact that a valve (20) is fitted tightly to at least one of the closing devices (23, 25 ; 28).

12. Roller according to any one of claims 3 to 11, characterised by the fact that it has at least two chambers of air (19) of different lenghts.

13. Roller according to any one of claims 3 to 12, characterised by the fact that each chamber of air (19) has a cavity (35) into which can be fitted the valve (20) of one of the adjacent chambers of air (19).

14. Roller according to any one of the preceding claims, characterised by the fact that at the location where the end flanges (23, 30) and/or the intermediary flanges (24) are found, the flexible and elastic soil repulsion element (19) comprises reinforcements (33, 34).

15. Agricultural machine, characterised by the fact that it comprises a soil compaction roller (1) according to any of the preceding claims.

## Patentansprüche

1. Bodenverfestigungswalze (1) mit einem starren mit Aussparrungen versehenen äusseren Mantel (18), dadurch gekennzeichnet, dass ein flexibles und elastisches Erdabstossorgan (19) mindestens teilweise im inneren des Raums des äusseren Mantels (18) angeordnet ist, das die Aussparrungen dieses Mantels (18) etwa schliesst, sodass dieses Organ (19) in Kontakt mit dem Boden kommt, und mindestens teilweise deformiert wird und sodass der deformierte Teil (22) dieses flexiblen und elastischen Erdabstossorgans (19) seine Form wieder zurücknimmt, nach dem er den Kontakt mit dem Boden verlassen hat während der Bewegung der Walze (1).

2. Walze nach Anspruch 1, dadurch gekennzeichnet, dass das flexible und elastische Erdabstossorgan (19) durch einen Schlauch (19) gebildet ist.

3. Walze nach Anspruch 1, dadurch gekennzeichnet, dass das flexible und elastische Erdabstossorgan (19) durch mehrere Schläuche (19) gebildet ist.

4. Walze nach Anspruch 2 oder 3, dadurch gekennzeichnet, dass der Schlauch (19) durch ein an seiner beiden Enden offenes Rohr gebildet ist.

5. Walze nach Anspruch 4, dadurch gekennzeichnet, dass jedes Ende des Rohrs mittels einem Schliessorgan (23, 25 ; 28) geschlossen ist.

6. Walze nach Anspruch 5, dadurch gekennzeichnet, dass das Schliessorgan mittels einem im äusseren Flansch (23) gebildeten Absatz (25) gebildet ist, auf welchem das entsprechende Ende des Rohrs montiert ist.

7. Walze nach Anspruch 5, dadurch gekennzeichnet, dass das Schliessorgan durch eine Scheibe (28) gebildet ist, die in das entsprechende Ende des Rohrs eingesetzt ist.

8. Walze nach Anspruch 7, dadurch gekennzeichnet, dass die Scheibe (28) Mitteln (29) aufweist, die ihre radiale Bewegung gegenüber der Achse der Walze (1) verhindern.

9. Walze nach Anspruch 8, dadurch gekennzeichnet, dass die Mitteln (29), die die radiale Bewegung der Scheibe (28) gegenüber der Achse der Walze (1) verhindern, sich im Einsatz befinden nach Aufblasen des Schlauches (19).

10. Walze nach einem der Ansprüche 5 bis 9, dadurch gekennzeichnet, dass die Verbindung zwischen einem Ende des Rohrs und seinem entsprechenden Schliessorgan (23, 25 ; 28) durch ein Klemmorgan (26) gemacht wird.

11. Walze nach einem der Ansprüche 5 bis 10, dadurch gekennzeichnet, dass ein Ventil (20) auf mindestens einem der Schliessorganen (23, 25 ; 28) dicht montiert ist.

12. Walze nach einem der Ansprüche 3 bis 11, dadurch gekennzeichnet, dass sie mindestens zwei Schläuche (19) von ungleicher Länge aufweist.

13. Walze nach einem der Ansprüche 3 bis 12, dadurch gekennzeichnet, dass jeder Schlauch (19) eine Vertiefung (35) aufweist, in welcher sich das Ventil (20) einem der anliegenden Schläuche (19) einlegen kann.

14. Walze nach einem der vorhergehenden Ansprüche, dadurch gekennzeichnet, dass an den Stellen wo sich die äusseren und/oder die mittleren Flansche (23, 24, 30) erstrecken, das flexible und elastische Erdabstossorgan (19) Verstärkungen (33, 34) aufweist.

15. Bodenbearbeitungsmaschine, dadurch gekennzeichnet, dass sie eine Walze (1) nach einem der vorhergehenden Ansprüche aufweist.